# EUROPÄISCHE PATENTSCHRIFT

(11) **EP 1 222 752 B1**
(45) Veröffentlichungstag und Bekanntmachung des Hinweises auf die Patenterteilung: **06.05.2004**
(21) Anmeldenummer: 00982929.2
(22) Anmeldetag: 28.09.2000
(51) Int. Cl.: H04B 1/707, H04J 11/00

(54) **DATENÜBERTRAGUNGSVERFAHREN UND -VORRICHTUNG**
METHOD AND DEVICE FOR TRANSMITTING DATA
PROCEDE ET DISPOSITIF DE TRANSMISSION DE DONNEES

(30) Priorität: 30.09.1999 DE 19946872
(43) Veröffentlichungstag der Anmeldung: 17.07.2002
(73) Patentinhaber: ROBERT BOSCH GMBH, 70442 Stuttgart (DE)
(72) Erfinder: KOWALEWSKI, Frank, 38228 Salzgitter (DE)
(86) Internationale Anmeldenummer: PCT/DE2000/003417
(87) Internationale Veröffentlichungsnummer: WO 2001/024395

(56) Entgegenhaltungen:
- EP-A- 0 936 749
- WO-A-99/03225
- ADACHI F ET AL: "WIDEBAND DS-CDMA FOR NEXT-GENERATION MOBILE COMMUNICATIONS SYSTEMS" IEEE COMMUNICATIONS MAGAZINE,IEEE SERVICE CENTER. PISCATAWAY, N.J,US, Bd. 36, Nr. 9, 1. September 1998 (1998-09-01), Seiten 56-69, XP000784827 ISSN: 0163-6804

## Beschreibung

### STAND DER TECHNIK

Die vorliegende Erfindung betrifft ein Datenübertragungverfahren, bei dem ein CDMA-codiertes Datensignal in Form eines Datenstroms von aufgespreizten Datenbursts zwischen einem Sender und einem Empfänger übertragen wird, wobei hierarchische CDMA-Codes zur Übertragung verwendet werden sowie eine entsprechende Datenübertragungsvorrichtung.

Obwohl prinzipiell auf beliebige Datenübertragungen anwendbar, werden die vorliegende Erfindung sowie die ihr zu Grunde liegende Problematik in Bezug auf ein zelluläres CDMA-Datenübertragungssystem (CDMA = Code Division Multiple Access) erläutert.

Über Mehrwegekanäle übertragene CDMA-kodierte Daten können durch Rake-Empfang oder Verfahren, die gegenseitige Störungen der Daten eliminieren, detektiert werden.

Insbesondere lassen sich durch Code-Vielfachzugriff (CDMA = Code Division Multiple Access) mehrere Datenströme gleichzeitig über ein gemeinsames Frequenzband übertragen. Dabei werden die zu übertragenden Symbole der Datenströme mit sogenannten Spreizungscodes in Signalstücke der Länge der Spreizungscodes umgerechnet. Die Signalstücke der Datensymbole eines Zeitpunktes werden summiert, und die summierten Stücke werden entsprechend ihrer zeitlichen Reihenfolge versendet, wie aus K. D. Kammeyer, Nachrichtenübertragung, 2. Aufl., Reihe Informationstechnik, Teubner, Stuttgart, 1996 bekannt.

Aus den empfangenen Signalstücken lassen sich die Datensymbole der Datenströme durch Entspreizung mit den Spreizungscodes wieder zurückgewinnen. Bei Übertragung der Signale über mehrere Pfade (wie z.B. beim Mobilfunk) ist es vorteilhaft, die Entspreizung für alle Pfade getrennt vorzunehmen und die entspreizten Signale aller Pfade gewichtet (mit den Koeffizienten der Kanalimpulsantwort) aufzusummieren. Ein so funktionierender CDMA-Empfänger heißt Rake-Empfänger.

Durch die Mehrwegeübertragung entstehen am Empfänger gegenseitige Störungen der übertragenen Signale. Im Gegensatz zum Rake-Empfänger können diese Störungen z.B. durch gemeinsame Detektion (JD = Joint Detection) im Empfänger eliminiert werden, wie aus A. Klein, G.K. Kaleh und P.W. Baier: "Zero Forcing and Minimum Mean-Square-Error Equalization for Multiuser Detection in Code-Division Multiple-Access Channels", IEEE Trans. Vehic. Tech., Bd. 45 (1996), 276-287 bekannt.

CDMA-Codes mit großem Spreizungsfaktor lassen sich aus zwei Codes mit kleinerem Spreizungsfaktor durch Kronecker-Multiplikation konstruieren. Eine Menge so konstruierter CDMA-Codes heißt hierarchisch. Die im UMTS (UMTS = Universal Mobile Telephone System) verwendeten OVSF-Codes (OVSF = Orthogonal Variable Spreading Factor) sind hierarchisch konstruierte Codes (siehe Concept Group Alpha: "EVALUATION DOCUMENT (DRAFT 1.0), Part 1", ETSI Tdoc SMG2 270/97).

Der Rake-Empfänger und das Joint Detection-Verfahren zum Empfang hierarchischer Codes sind unnötig komplex bzw. unnötig aufwendig.

Die Anmeldung WO 99/03225 offenbart ein Datenübertragungsverfahren, bei dem hierarchische CDMA-Codes verwendet werden, mit den Merkmalen des Oberbegriffs des Anspruchs 1.

### VORTEILE DER ERFINDUNG

Die der vorliegenden Erfindung zu Grunde liegende Idee besteht darin, daß die empfangenen CDMA-Signale zunächst mit geringerem als nötigen Spreizfaktor detektiert werden und anschließend mit den zur Konstruktion des hierarchischen Codes verwendeten Codes entspreizt werden.

Das erfindungsgemäße Datenübertragungsverfahren mit den Merkmalen des Anspruches 1 bzw. die Datenübertragungsvorrichtung nach Anspruch 6 weisen den besonderen Vorteil auf, daß sie eine Detektion von mit hierarchischen Codes gespreizten Daten mit geringerem Aufwand als beim Rake-Empfänger bzw. bei gemeinsamer Detektion der Nutzdaten ermöglichen.

In den Unteransprüchen finden sich vorteilhafte Weiterbildungen und Verbesserungen des in Patentanspruch 1 angegebenen erfindungsgemäßen Verfahrens.

Gemäß einer bevorzugten Weiterbildung werden die Daten im ersten Schritt durch einen Rake-Empfänger detektiert und wird das Entspreizen in einer dem Rake-Empfänger nachgeschalteten Entspreizungseinrichtung durchgeführt.

Gemäß einer weiteren bevorzugten Weiterbildung wird im Rake-Empfänger (RE) eine Vorentspreizung durchgeführt.

Gemäß einer weiteren bevorzugten Weiterbildung werden die Daten im ersten Schritt durch einen JD-Empfänger mittels eines Detektionsverfahrens detektiert, das gegenseitige Störungen der übertragenen Daten eliminiert, und wird das Entspreizen in einer dem JD-Empfänger nachgeschalteten Entspreizungseinrichtung durchgeführt.

Gemäß einer weiteren bevorzugten Weiterbildung wird im JD-Empfänger eine Vorentspreizung durchgeführt.

### ZEICHNUNGEN

Ein Ausführungsbeispiel der Erfindung ist in der Zeichnung dargestellt und wird in der folgenden Beschreibung näher erläutert.

Es zeigen:
- Figur 1: eine Darstellung eines hierarchischen Code-Baumes zur Erläuterung einer Ausführungsform der Erfindung; und
- Figur 2: ein Blockdiagramm einer Vorrichtung zur Detektion hierarchisch codierter CDMA-Signale gemäß einer Ausführungsform der vorliegenden Erfindung.

### BESCHREIBUNG DER AUSFÜHRUNGSBEISPIELE

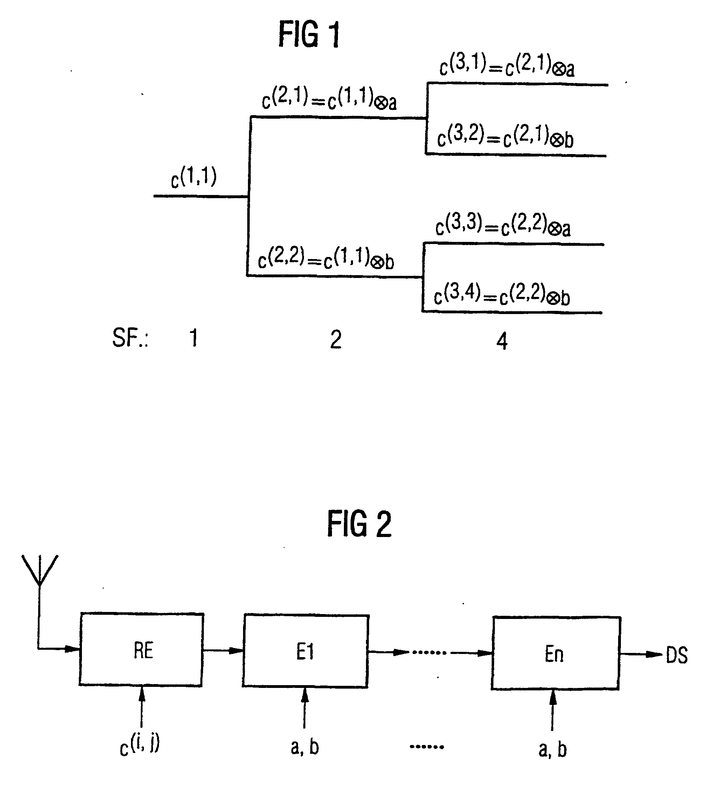

Fig. 1 zeigt die Konstruktion hierarchischer Codes. In Fig. 1 bezeichnen SF den Spreizungsfaktor und **c**^{(i,j)} die zugehörigen Spreizungscodes.

Durch Kronecker-Multiplikation mit den Generatoren a, b werden aus einem gegebenen Code **c**^{(i,j),} mit kleinerem SF Codes **c**^{(i+1,k)} mit größerem SF gebildet.

Der Aufbau hierarchischer Codes erlaubt es, hierarchisch gespreizte Daten iterativ durch eine entsprechende "inverse Kronecker-Multiplikation" im Empfänger zu entspreizen.

Beim vorliegenden Beispiel erfolgt eine CDMA-Datenübertragung mit hierarchischen Codes über einen Mehrwegekanal mit OVSF-Codes entsprechend Fig. 1 und ein Rake-Empfangsverfahren im Empfänger.

Allerdings unterscheidet sich das Rake-Empfangsverfahren wesentlich vom Stand der Technik, da im Rake-Empfänger nicht die vollständige Entspreizung durchgeführt wird, sondern in nachgeschalteten Entspreizern. Im konkreten Beispiel führt der Rake-Empfänger gar keine Entspreizung durch.

Eine entsprechende Vorrichtung ist in Fig. 2 dargestellt. In Fig. 2 bezeichnen RE einen Rake-Empfänger, E1 ... En Entspreizer und DS entspreizte Datensymbole.

Zunächst erfolgt im Rake-Empfänger eine Detektion der Daten zum Muttercode **c**^{(1,1)} durch den bekannten Rake-Empfang.

Dann wird eine Entspreizung der im vorigen Schritt detektierten Mutterdaten durch Entspreizung mit den Generatoren a und/oder b durchgeführt, um einen Muttercode des Empfangscodes mit größerem Spreizungfaktor, also hier SF = 2, zu berechnen.

Dann wird eine erneute Entspreizung der im vorigen Schritt detektierten Mutterdaten mit SF = 2 durch Entspreizung mit den Generatoren a und/oder b durchgeführt, um die Empfangsdaten mit dem Spreizungfaktor SF = 4 zu berechnen, welche dann als Datenstrom DS zur Weiterverarbeitung ausgegeben werden.

Allgemein werden, falls die im zweiten Schritt gewonnenen Daten weit genug entspreizt sind, diese als detektierte Daten genommen. Anderenfalls wird der zweite Schritt mit den im letzten zweiten Schritt gewonnenen Daten erneut durchgeführt, bis die Empfangsdaten vorliegen.

Dazu kennt im übrigen der Empfänger den Spreizungsfaktor der vom Rake-Empfänger RE ausgegebenen Daten sowie die Generatoren a und b.

Obwohl die vorliegende Erfindung vorstehend anhand eines bevorzugten Ausführungsbeispiels beschrieben wurde, ist sie darauf nicht beschränkt, sondern auf vielfältige Weise modifizierbar.

Obwohl beim ersten Beispiel eine CDMA-Datenübertragung mit hierarchischen Codes über Mehrwegekanal mit OVSF-Codes entsprechend Fig. 1 und ein Rake-Empfangsverfahren im Empfänger erfolgt, kann auch ein Empfangsverfahren mit gemeinsamer Detektion (JD) im Empfänger erfolgen.

Insbesondere kann kann das erfindungsgemäße Verfahren in allen Datenübertragungssystemen angewendet werden, die einen Übertragungsmodus verwenden, wo mit hierarchischen CDMA-Codes kodierte Daten detektiert werden sollen.

Obwohl im konkreten Beispiel der Rake-Empfänger gar keine Entspreizung durchführt, kann der Rake-Empfänger durchaus eine Vorentspreizung vornehmen, z.B. auf SF = 2.

## Patentansprüche

1. Datenübertragungsverfahren, bei dem ein CDMA-codiertes Datensignal in Form eines Datenstroms von aufgespreizten Datenbursts zwischen einem Sender und einem Empfänger (RE, E1, ..., En) übertragen wird, wobei hierarchische CDMA-Codes zur Übertragung verwendet werden, wobei in einem ersten Schritt Daten zu einem Muttercode c^{(i,j)} des bzw. der Empfangscodes detektiert werden, und wobei in einem zweiten Schritt die detektierten Daten mit einem bzw. mehreren Generatoren (a, b) entspreizt werden, **dadurch gekennzeichnet, dass** in einem dritten Schritt der Detektionsprozess abgebrochen wird, falls die Daten so weit entspreizt sind, dass Empfangsdaten vorliegen, oder andernfalls der zweite Schritt mit den zuletzt entspreizten Daten solange wiederholt wird, bis die Daten so weit entspreizt sind, dass Empfangsdaten vorliegen.

2. Verfahren nach Anspruch 1, **dadurch gekennzeichnet, dass** die Daten im ersten Schritt durch einen Rake-Empfänger (RE) detektiert werden und das Entspreizen in einer dem Rake-Empfänger (RE) nachgeschalteten Entspreizungseinrichtung (E1, ..., En) durchgeführt wird.

3. Verfahren nach Anspruch 2, **dadurch gekennzeichnet, dass** im Rake-Empfänger (RE) eine Vorentspreizung durchgeführt wird.

4. Verfahren nach Anspruch 1, **dadurch gekennzeichnet, dass** die Daten im ersten Schritt durch einen JD-Empfänger mittels eines Detektionsverfahrens detektiert werden, das gegenseitige Störungen der übertragenen Daten eliminiert, und das Entspreizen in einer dem JD-Empfänger nachgeschalteten Entspreizungseinrichtung (E1, ..., En) durchgeführt wird.

5. Verfahren nach Anspruch 4, **dadurch gekennzeichnet, dass** im JD-Empfänger eine Voreintspreizung durchgeführt wird.

6. Vorrichtung zur Durchführung des Verfahrens nach mindestens einem der vorherigen Ansprüche, **gekennzeichnet durch** eine Empfangseinrichtung (RE, E1, ..., En) mit:
einer ersten Stufe (RE) zum Detektieren gespreizter Daten entsprechend einem Muttercode c^{(i,j)} des bzw. der Empfangsodes;
einer zweiten nachgeschalteten Stufe (E1, ..., En) zum Entspreizen der detektierten Daten **durch** Entspreizung mit einem bzw. mehreren Generatoren (a, b) mit Mitteln zur Unterbrechung des Detektionsprozesses, falls die Daten so weit entspreizt sind, dass Empfangsdaten vorliegen und zur Wiederholung der Entspreizung mit den zuletzt entspreizten Daten bis die Daten so weit entspreizt sind, dass Empfangsdaten vorliegen.

## Claims

1. Data transmission method, in which a CDMA-coded data signal is transmitted in the form of a data stream of spread data bursts between a transmitter and a receiver (RE, E1, ..., En), with hierarchical CDMA codes being used for transmission, with data relating to a master code c^{(i,j)} of the received code or codes being detected in a first step, and with the detected data being despread by means of one or more generators (a, b) in a second step, **characterized in that**, in a third step, the detection process is interrupted if the data is despread to such an extent that received data is produced or, otherwise, the second step is repeated with the most recently despread data until the data has been despread to such an extent that received data is produced.

2. Method according to Claim 1, **characterized in that**, in the first step, the data is detected by means of a rake receiver (RE), and the despreading is carried out in a despreading device (E1, ..., En) which is connected downstream from the rake receiver (RE).

3. Method according to Claim 2, **characterized in that** initial despreading is carried out in the rake receiver (RE).

4. Method according to Claim 1, **characterized in that**, in a first step, the data is detected by a JD receiver by means of a detection method which eliminates mutual interference in the transmitted data, and the despreading is carried out in a despreading device (E1, ..., En) which is connected downstream from the JD receiver.

5. Method according to Claim 4, **characterized in that** initial despreading is carried in the JD receiver.

6. Apparatus for carrying out the method according to at least one of the preceding claims, **characterized by** a receiving device (RE, E1, ..., En) having:
a first stage (RE) for detection of spread data corresponding to a master code c^{(i,j)} for the received code or codes;
a second, downstream stage (E1, ..., En) for despreading of the detected data by despreading by means of one or more generators (a, b) having means for interruption of the detection process if the data has been despread to such an extent that received data is produced, and for repetition of the despreading with the most recently despread data until the data has been despread to such an extent that received data is produced.

## Revendications

1. Procédé de transmission de données pour transmettre un signal de données codé avec accès multiple par répartition en code AMRC sous la forme d'un flux de données constitué de paquets de données élargis, entre un émetteur et un récepteur (RE, E1, ..., En) avec utilisation pour la transmission, de codes AMRC hiérarchiques, des données étant, dans une première étape, détectées dans un code-mère c^{(i, j)} du ou des codes de réception, tandis que, dans une deuxième étape, les données détectées sont désélargies au moyen d'un ou plusieurs générateurs (a, b),
**caractérisé en ce que**
dans une troisième étape le processus de détection est arrêté si les données sont désélargies au point que l'on dispose de données de réception, et, dans le cas contraire, la deuxième étape avec les données désélargies est répétée jusqu'à ce que le désélargissement soit suffisant pour qu'on dispose de données de réception.

2. Procédé selon la revendication 1,
**caractérisé en ce que**
dans la première étape, les données sont détectées par un récepteur Rake (RE) et leur désélargissement est effectué dans un dispositif de désélargissement (E1, ..., En) monté en aval du récepteur (RE).

3. Procédé selon la revendication 2,
**caractérisé en ce que**
dans le récepteur à rake (RE) est effectuée un prédésélargissement.

4. Procédé selon la revendication 1,
**caractérisé en ce que**
dans la première étape, les données sont détectées dans un récepteur à détection commune JD au moyen d'un procédé de détection qui élimine les parasites réciproques des données transmises et le désélargissement est effectué dans un dispositif de désélargissement (E1, ..., En) monté en aval du récepteur JD.

5. Procédé selon la revendication 4,
**caractérisé en ce que**
dans le récepteur JD est effectué un prédésélargissement.

6. Dispositif pour la mise en oeuvre du procédé selon l'une des revendications précédentes,
**caractérisé en ce qu'**
il comporte
- un premier étage (RE) pour détecter des données élargies correspondant à un code-mère c^{(i, j)} du ou des récepteurs,
- un second étage (E1, ..., En) en aval du premier pour désélargir les données détectées au moyen d'un ou plusieurs générateurs (a, b) avec des moyens pour arrêter le processus de détection quand les données sont suffisamment désélargies pour qu'on dispose de données de réception et pour répéter le désélargissement de ces données jusqu'à ce qu'elles soient désélargies au point qu'on dispose de données de réception.
